# EUROPÄISCHE PATENTSCHRIFT

(11) **EP 1 076 826 B1**
(45) Veröffentlichungstag und Bekanntmachung des Hinweises auf die Patenterteilung: **01.09.2004**
(21) Anmeldenummer: 99931009.7
(22) Anmeldetag: 04.05.1999
(51) Int. Cl.: G01P 15/08, G01L 9/00

(54) **HERSTELLVERFAHREN FÜR MIKROMECHANISCHE BAUELEMENTE**
METHOD FOR PRODUCING MICROMECHANICAL COMPONENTS
PROCEDE DE PRODUCTION DE COMPOSANTS MICROMECANIQUES

(30) Priorität: 08.05.1998 DE 19820758
(43) Veröffentlichungstag der Anmeldung: 21.02.2001
(73) Patentinhaber: Infineon Technologies AG, 81669 München (DE)
(72) Erfinder: AIGNER, Robert, D-181675 München (DE); OPPERMANN, Klaus-Günter, D-83607 Holzkirchen (DE); KAPELS, Hergen, D-85579 Neubiberg (DE)
(74) Vertreter: Zimmermann & Partner
(86) Internationale Anmeldenummer: PCT/DE1999/001337
(87) Internationale Veröffentlichungsnummer: WO 1999/058985

(56) Entgegenhaltungen:
- DE-A- 4 336 774
- LOFDAHL L ET AL: "SMALL SILICON BASED PRESSURE TRANSDUCERS FOR MEASUREMENTS IN TURBULENT BOUNDARY LAYERS" EXPERIMENTS IN FLUIDS, Bd. 17, Nr. 1/02, 1. Juni 1994 (1994-06-01), Seiten 24-31, XP000477227 BERLIN DE ISSN: 0723-4864

## Beschreibung

Die vorliegende Erfindung betrifft ein Herstellverfahren für mikromechanische Bauelemente mit einem Hohlraum, der in einer Opferschicht ausgeätzt wird.

Bei der Herstellung von mikromechanischen Bauelementen, die z. B. im Rahmen eines CMOS-Prozesses hergestellt werden können, ist es oftmals, beispielsweise im Fall von Drucksensoren, erforderlich, einen Hohlraum unter einer als Membran oder dergleichen vorgesehenen Polysiliziumschicht in einer Opferschicht (sacrificial layer) auszuätzen. Die Ätzlöcher in der Polysiliziumschicht sind üblicherweise in einem Raster von typisch 5 µm Lochabstand angeordnet. Größere Abstände führen zu unvertretbar langen Ätzzeiten und unzulässig starkem Ätzangriff an den Schichten, die zur Bildung der herzustellenden Struktur vorgesehen sind und erhalten bleiben müssen. Wenn die Ätzlöcher verschlossen werden müssen, z. B. bei Drucksensoren, verursachen die Verschlußmaterialien Inhomogenitäten in der Membran und verschlechtern die Langzeitstabilität des Sensors. Bei der Anwendung derartiger Membranen als akustische Isolatoren für Bulk-Acoustic-Wave-Resonatoren werden dünne großflächige Membranen gefordert, auf denen keine zusätzlichen Verschlußschichten aufgebracht sein dürfen. Unterätzungsradien von mehr als 10 µm sind im Materialsystem von Silizium/Siliziumoxid bisher nicht praktikabel.

Aus der DE 43 36 774 A1 war ein Verfahren zur Herstellung mikromechanischer Strukturen bekannt, bei dem Ätzöffnungen zur Unterätzung der beweglichen mikromechanischen Struktur nur in deren Randbereich vorgesehen sind und bei dem der Unterätzprozeß mittels in der Opferschicht vorgesehener Kanäle beschleunigt wird. Diese Kanäle sind vor der Verbindung zweier Substrate zur Herstellung eines SOI-Substrates in der Isolationsschicht an der Oberseite des einen verwendeten Substrates hergestellt.

Aufgabe der vorliegenden Erfindung ist es, ein Herstellverfahren für mikromechanische Bauelemente mit einem Hohlraum unter einer Membranschicht anzugeben, mit dem die Membranschicht ausreichend homogen mit den üblichen Ätzverfahren herstellbar ist.

Diese Aufgabe wird mit dem Herstellverfahren mit den Merkmalen des Anspruches 1 gelöst. Ausgestaltungen ergeben sich aus dem abhängigen Anspruch.

Das erfindungsgemäße Verfahren unterscheidet sich von den herkömmlichen Verfahren dadurch, daß Ätzöffnungen in einem Randbereich des als Funktionselement, z. B. als Membran, vorgesehenen Anteils einer Strukturschicht, im folgenden einheitlich als Membranschicht bezeichnet, über einem ausgeätzten Hohlraum vorhanden sind, wobei dieser Randbereich von der seitlichen Wand oder Berandung dieses Hohlraumes gemessen höchstens ein Zehntel des Durchmessers des Funktionselementes, z. B. der Membran, umfaßt. Damit ist erreicht, daß in jeder durch das Zentrum der Membran verlaufenden Richtung vier Fünftel der Membran frei von Inhomogenitäten ist.

Auf Grund dieser Struktur kann das Bauelement mit den üblichen Ätzverfahren zur Herstellung mikromechanischer Bauelemente mit einem in einer Opferschicht vorhandenen Hohlraum hergestellt werden. Zu diesem Zweck wird in der Opferschicht, auf der die Membranschicht aufgebracht ist, ein zusammenhängendes Netz aus kanalförmigen Hohlräumen geschaffen. Dies geschieht noch vor der Abscheidung der Membranschicht. Danach werden in der Membranschicht in dem erwähnten Randbereich Ätzlöcher hergestellt. Die Opferschicht wird in dem vorgesehenen Umfang entfernt, wobei sich das Ätzmittel durch die kanalförmigen Hohlräume so schnell ausbreitet, daß die Opferschicht im gesamten Bereich des herzustellenden Hohlraumes entfernt wird, aber der Ätzangriff nicht über die vorgesehene Berandung des Hohlraumes hinweg stattfindet oder gar die Membranschicht beschädigt. Die kanalartigen Hohlräume können durch Ausätzen einer Opferschicht durch Öffnungen einer darauf aufgebrachten Hilfsschicht hergestellt werden. Bevor die Membranschicht abgeschieden wird, wird die Hilfsschicht vorzugsweise mit einer Planarisierungsschicht eingeebnet, womit auch die Ätzöffnungen verschlossen werden.

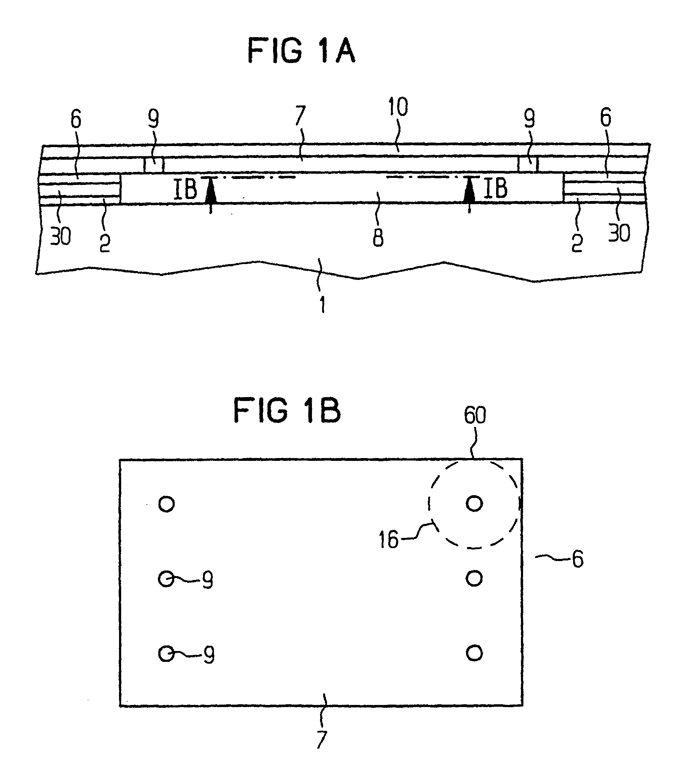

Es folgt eine genauere Beschreibung von Beispielen des erfindungsgemäßen Herstellverfahrens anhand der Figuren 1 bis 7.

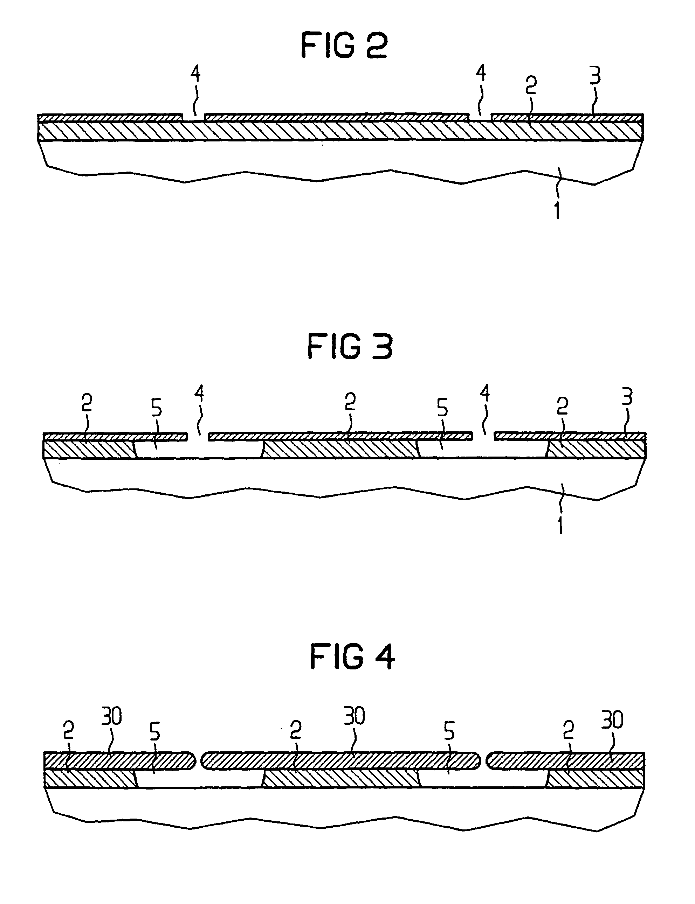

Figuren 1a und 1b zeigen zwei Schnitte durch ein Bauelement. Figuren 2 bis 7 zeigen Querschnitte durch Zwischenprodukte eines Bauelementes nach verschiedenen Schritten des Herstellverfahrens.

In Figur 1a ist im Querschnitt ein Bauelement auf einem Substrat 1 mit einer Membranschicht 7 über einem Hohlraum 8 dargestellt. Der Hohlraum ist seitlich begrenzt durch einen restlichen Anteil der Opferschicht, die hier auf Grund eines speziellen und im folgenden anhand der Figuren 2 bis 7 beschriebenen Herstellverfahrens aus drei Lagen, nämlich der Opferschicht 2, der oxidierten Hilfsschicht 30 und der Planarisierungsschicht 6, besteht. In der Membranschicht 7 sind im Randbereich des als Membran fungierenden Anteils über dem Hohlraum 8 Ätzöffnungen 9 vorhanden, die nachträglich mit dem Material der Membranschicht (z. B. Polysilizium) oder z. B. mit einem Oxid verschlossen worden sein können. Es kann auch eine hier als Beispiel eingezeichnete Verschlußschicht 10 ganzflächig aufgebracht sein, die die Ätzöffnungen 9 abdeckt und/oder auffüllt.

Figur 1b zeigt den in Figur 1a eingezeichneten Schnitt in Blickrichtung von unten gegen die Membran. Es sind die Membranschicht 7 und ringsum die (geschnittene) Planarisierungsschicht 6 erkennbar. Die Ätzöffnungen 9 sind hier als Beispiel an den beiden Schmalseiten der hier rechteckigen Membran eingezeichnet. Die Membran kann aber auch rund oder quadratisch oder irgendwie anders berandet sein. Der Rand 60 der Planarisierungsschicht 6 definiert den Rand des die Membran bildenden Anteils der Membranschicht 7. Um eine Ätzöffnung ist ein gestrichelter Kreis 16 gezeichnet, der verdeutlicht, bis wohin bei einem isotropen Ausbreiten des Ätzmittels in der Opferschicht der unter dieser Öffnung ausgeätzte Hohlraum reicht, wenn der Ätzangriff an dem Rand 60 stoppen soll.

Um das Bauelement mit einem herkömmlichen Ätzverfahren herstellen zu können, wird eine Strukturierung der Opferschicht mit kanalförmigen Hohlräumen vorgenommen. Das geschieht am besten, indem man SiO₂ und Polysilizium verwendet und die gute Ätzselektivität zwischen diesen Materialien ausnutzt.

Figur 2 zeigt im Querschnitt einen Ausschnitt aus dem Substrat 1 unter einem mittleren Bereich des herzustellenden Hohlraumes. Eine Opferschicht 2, vorzugsweise aus Siliziumoxid, z. B. TEOS (Tetraethylorthosilicat), wird ganzflächig aufgebracht oder durch thermische Oxidation der Substratoberfläche hergestellt. Auf diese Opferschicht 2 wird eine Hilfsschicht 3, bezüglich derer das Material der Opferschicht selektiv weggeätzt werden kann und die z. B. Polysilizium sein kann, aufgebracht und mit Öffnungen 4 versehen. Diese Öffnungen 4 können z. B. eine oder mehrere Lochreihen oder Schlitze sein. Durch diese Lochreihen oder Schlitze hindurch wird das Material der Opferschicht 2 ausgeätzt, so daß entsprechend Figur 3 Kanäle 5 in der Opferschicht gebildet werden. Durch die Ätzrate und die Ätzdauer kann die Breite der Kanäle eingestellt werden.

Die Verwendung von Siliziumoxid für die Opferschicht 2 und Silizium für die Hilfsschicht 3 hat den besonderen Vorteil, daß in einem anschließenden Schritt die Hilfsschicht 4 thermisch oxidiert werden kann, so daß Siliziumoxid gebildet wird, das später in demselben Ätzschritt zusammen mit dem Oxid der Opferschicht 2 entfernt werden kann. Die thermisch oxidierte Hilfsschicht 30 ist in Figur 4 dargestellt, wobei auch erkennbar ist, daß das Volumen des Materials der Hilfsschicht sich beim Oxidieren wesentlich vergrößert.

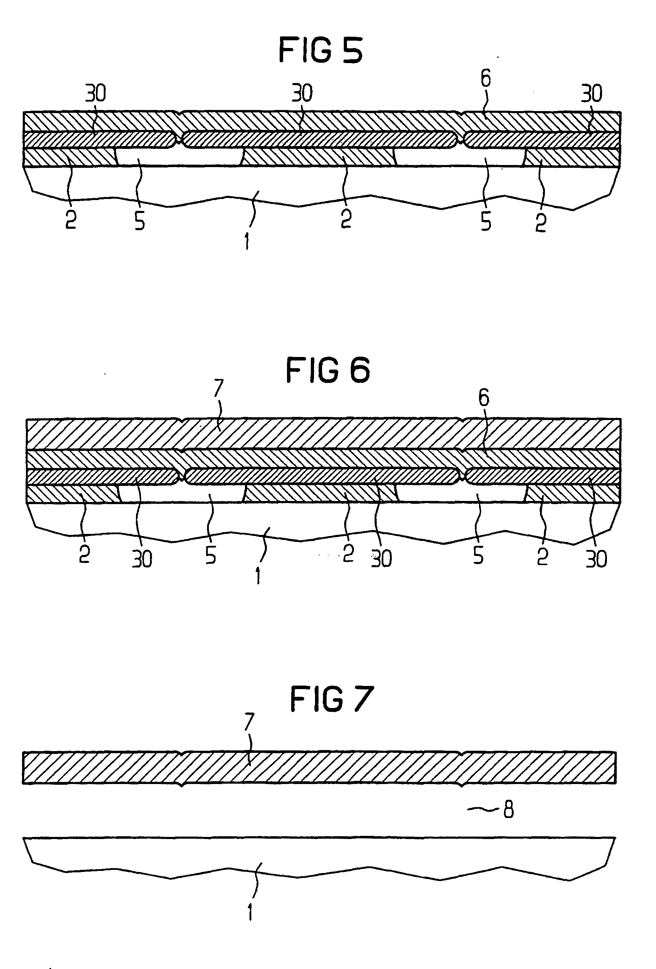

Soweit die Öffnungen 4 bei dieser Volumenvergrößerung noch nicht verschlossen werden, geschieht das durch Aufbringen einer Planarisierungsschicht 6 (Figur 5). Bei besonderen Anforderungen an die Glattheit der nachfolgend aufzubringenden Membranschicht wird für die Planarisierungsschicht 6 ein dotiertes Oxid verwendet und in einem nachfolgenden Temperschritt verflossen, d. h. zusätzlich eingeebnet.

Entsprechend Figur 6 wird die Membranschicht 7 aufgebracht. Die Ätzöffnungen werden in der Membranschicht nur im Randbereich, der in den Figuren 2 bis 7 nicht dargestellt ist, hergestellt. Der wesentliche Anteil der Membran bleibt daher, wie in Figur 7 gezeigt ist, weitestgehend homogen. Die Membranschicht ist z. B. Polysilizium, das in herkömmlicher Weise abgeschieden wird. Wegen der Kanäle 5 in der Opferschicht 2 und der vergleichsweise geringen Dicke der (ggf. oxidierten) Hilfsschicht 3, 30 und der Planarisierungsschicht 6 verteilt sich das Ätzmittel (oder bei Verwendung unterschiedlicher Materialien für die genannten Schichten auch mehrere erforderliche Ätzmittel) ausreichend schnell im gesamten Bereich der Membran. Der gesamte vorgesehene Hohlraum kann daher in kurzer Zeit unter Verwendung weniger Ätzöffnungen im Randbereich ausgeätzt werden, und man erhält so das erfindungsgemäß hergestellte Bauelement mit einer größtenteils homogen ausgebildeten Membran über dem Hohlraum.

Zusammenfassend lassen sich die Vorteile der Erfindung wie folgt benennen. Durch wenige Zusatzschritte in einem an sich bekannten Verfahren wird vor dem Abscheiden der Membranschicht in der Opferschicht ein zusammenhängendes Netz aus kanalförmigen Hohlräumen geschaffen, so daß in der Membranschicht nur ganz wenige seitlich angebrachte Zutrittsöffnungen für das Ätzmittel erforderlich sind. Diese Öffnungen können dort angebracht werden, wo später aufzubringende Verschlußschichten keinen negativen Einfluß auf die Funktion der Membran haben. Bei der bevorzugten Verwendung von Siliziumoxid für das Material der Opferschicht bewirken die Kanäle wegen der hydrophilen Eigenschaft dieses Oxides eine sehr rasche Verteilung des (flüssigen) Ätzmittels im gesamten freizuätzenden Bereich. Die effektive Länge der Front des Ätzangriffes kann damit wesentlich gesteigert werden, und das pro Zeiteinheit geätzte Volumen steigt entsprechend drastisch an. Die Ätzzeit ist daher praktisch unabhängig vom Abstand von der Ätzöffnung, da der Ablauf des Ätzvorganges nur durch die Reaktionsrate begrenzt ist und nicht von der Diffusionszeit. Bei einem Abstand der Kanäle von typisch 10 µm können praktisch beliebige Strukturen mit typischen Abmessungen mikromechanischer Bauelemente in akzeptabler Zeit freigeätzt werden. Weitere Vorteile ergeben sich auch aus der Tatsache, daß durch eine geeignete Anordnung von Ätzkanälen die Unterätzung richtungsabhängig gesteuert werden kann.

## Patentansprüche

1. Herstellverfahren für ein mikromechanisches Bauelement mit einer Membranschicht (7), die zumindest mit einem Anteil über einem Hohlraum (8) angeordnet ist, bei dem
- in einem ersten Schritt auf eine Oberseite eines Substrates (1) eine Opferschicht (2) aufgebracht wird,
- in einem zweiten Schritt auf diese Opferschicht (2) eine Hilfsschicht (3) aus einem Material, bezüglich dessen die Opferschicht (2) selektiv geätzt werden kann, aufgebracht wird,
- in einem dritten Schritt in dieser Hilfsschicht (3) Öffnungen (4) hergestellt werden,
- in einem vierten Schritt unter Verwendung dieser Öffnungen (4) Kanäle (5) in der Opferschicht geätzt werden,
- in einem fünften Schritt eine Planarisierungsschicht (6) aufgebracht wird und die Öffnungen (4) verschlossen werden,
- in einem sechsten Schritt die Membranschicht (7) aufgebracht wird,
- in einem siebenten Schritt Ätzöffnungen (9) in einem Randbereich der Membranschicht (7) hergestellt werden und
- in einem achten Schritt unter Verwendung dieser Ätzöffnungen (9) und der in dem vierten Schritt hergestellten Kanäle (5) die Opferschicht (2), die Hilfsschicht (3) und die Planarisierungsschicht (6) im Bereich des herzustellenden Hohlraumes (8) entfernt werden.

2. Verfahren nach Anspruch 1, bei dem
die Opferschicht (2) und die Planarisierungsschicht (6) aus einem Siliziumoxid hergestellt werden und
die Hilfsschicht (3) aus Silizium hergestellt wird und bei dem
zwischen dem vierten Schritt und dem fünften Schritt das Silizium der Hilfsschicht (3) thermisch oxidiert wird.

## Claims

1. Production method for a micromechanical component having a membrane layer (7), at least part of which is arranged above a cavity (8), in which
- in a first step, a sacrificial layer (2) is applied to an upper face of a substrate (1),
- in a second step, an auxiliary layer (3) composed of a material with respect to which the sacrificial layer (2) can be selectively etched is applied to this sacrificial layer (2),
- in a third step, openings (4) are produced in this auxiliary layer (3),
- in a fourth step, channels (5) are etched in the sacrificial layer using these openings (4),
- in a fifth step, a planarization layer (6) is applied and the openings (4) are closed,
- in a sixth step, the membrane layer (7) is applied,
- in a seventh step, etching openings (9) are produced in an edge region of the membrane layer (7), and
- in an eighth step, the sacrificial layer (2), the auxiliary layer (3) and the planarization layer (6) are removed in the region of the cavity (8) that is to be produced, using these etching openings (9) and the channels (5) produced in the fourth step.

2. Method according to Claim 1, in which
the sacrificial layer (2) and the planarization layer (6) are produced from silicon oxide, and
the auxiliary layer (3) is produced from silicon, and in which
the silicon of the auxiliary layer (3) is thermally oxidized between the fourth step and the fifth step.

## Revendications

1. Procédé de fabrication d'un composant micromécanique comportant une couche (7) de membrane, qui est disposée par au moins une partie au-dessus d'une cavité (8), dans lequel
- à une première étape, on dépose une couche (2) sacrificielle sur une surface supérieure d'un substrat (1),
- à une deuxième étape, on dépose sur cette couche (2) sacrificielle, une couche (3) auxiliaire en un matériau par rapport auquel la couche (2) sacrificielle peut être attaquée chimiquement de manière sélective,
- à une troisième étape, on pratique des ouvertures (4) dans cette couche (3) auxiliaire,
- à une quatrième étape, on ménage par attaque, en utilisant ces ouvertures (4), des canaux (5) dans la couche sacrificielle,
- à une cinquième étape, on dépose une couche (6) de planarisation et on ferme les ouvertures (4),
- à une sixième étape, on dépose la couche (7) de membrane,
- à une septième étape, on produit des ouvertures (9) d'attaque dans une région des bords de la couche (7) de membrane et
- à une huitième étape, on enlève, en utilisant ces ouvertures (9) d'attaque et les canaux (5) ménagés à la quatrième étape, la couche (2) sacrificielle, la couche (3) auxiliaire et la couche (6) de planarisation dans la région de la cavité (8) à produire.

2. Procédé suivant la revendication 1, dans lequel
on produit la couche (2) sacrificielle et la couche (6) de planarisation en un oxyde de silicium et
on produit la couche (3) auxiliaire en silicium, et dans lequel
on oxyde thermiquement le silicium de la couche (3) auxiliaire entre la quatrième étape et la cinquième étape.
